# EUROPÄISCHE PATENTSCHRIFT

(11) **EP 2 243 050 B1**
(45) Veröffentlichungstag und Bekanntmachung des Hinweises auf die Patenterteilung: **13.02.2013**
(21) Anmeldenummer: 08872310.1
(22) Anmeldetag: 22.12.2008
(51) Int. Cl.: G02B 6/38, G02B 6/44, G02B 6/42

(54) **KABELEINFÜHRUNG MIT VORGELAGERTER HALTEVORRICHTUNG**
CABLE INSERTION HAVING UPSTREAM MOUNTING FIXTURE
ENTRÉE DE CÂBLE AVEC DISPOSITIF DE MAINTIEN MONTÉ EN AMONT

(30) Priorität: 16.02.2008 CH 232082008
(43) Veröffentlichungstag der Anmeldung: 27.10.2010
(73) Patentinhaber: Huber+Suhner AG, 9100 Herisau (CH)
(72) Erfinder: GREUB, Daniel, CH-9000 St. Gallen (CH); GADMER, Laif, CH-9113 Degersheim (CH); STRASSER, Martin Michael, CH-9205 Waldkirch (CH); VÖLKER, Michael Lothar, CH-9468 Sax (CH)
(74) Vertreter: Rentsch Partner AG
(86) Internationale Anmeldenummer: PCT/EP2008/068138
(87) Internationale Veröffentlichungsnummer: WO 2009/100796

(56) Entgegenhaltungen:
- EP-A- 0 154 781
- EP-A- 1 018 660

## Beschreibung

Die Erfindung liegt auf dem Gebiet der Kabeleinführungen für Kabel in Gehäuse, insbesondere optische Kabel, gemäss dem Oberbegriff der unabhängigen Patentansprüche.

Aus dem Stand der Technik sind Kabeleinführungen zum Einführen von Kabel in Gehäuse bekannt, die gleichzeitig als Zugentlastung oder Knickschutz dienen. Typische Vertreter dieser Gattung weisen einen Sockel mit einer Öffnung auf, die von einem Gewinde umgeben ist. Die Öffnung eignet sich üblicherweise zur Aufnahme eines Spannfutters, das mit einer mit dem Gewinde kooperierenden Überwurfmutter zusammengespannt werden kann. Diese Lösungen eignen sich nicht für Situationen in denen Kabel mit Steckern angeschlossen werden müssen. Meistens dienen die aus dem Stand der Technik bekannten Kabeleinführungen gleichzeitig zum elektrischen Abschirmen, resp. zum elektrisch leitenden Anschluss eines Aussenleiters an ein Gehäuse.

Die aus dem Stand der Technik bekannten Kabeleinführungen eignen sich nicht oder nur bedingt zur Verwendung mit Lichtleitern (Glasfasern). Im Unterschied zu den herkömmlichen Kabeleinführungen stellen Lichtleiter besondere Anforderungen, da sie typischerweise vorkonfektioniert mit einem oder mehreren Steckern versehen angeliefert werden. Die Kabeleinführung sollte daher die Möglichkeit bieten auch ein Kabel mit Steckern aufzunehmen. Aufwändige steckerartige Vorrichtungen sind bekannt, bei denen die Verbinder für die Lichtleiter fest in ein Aussengehäuse integriert sind. Diese weisen einen sehr komplizierten Aufbau auf und sind daher sehr kostspielig. Ebenfalls lassen sie sich in der Regel nicht einfach montieren.

Eine Kabeleinführung für Glasfasern gemäss dem Oberbegriff von Anspruch 1 ist in der Druckschrift EP 0 154 781 A2 offenbart.

Ein weiteres Problem tritt häufig zu Tage, wenn ein mehradriges Kabel mit einer entsprechenden Anzahl Steckern an ein Gegenstück angeschlossen werden muss. Z.B. kommt es häufig vor, dass ein Monteur unter widrigen Umständen über Kopf oder bei beengten Platzverhältnissen ein Kabel auf engstem Raum anschliessen muss und dabei nur eine Hand zur Verfügung hat.

Die aus dem Stand der Technik bekannten Kabeleinführungen eignen sich für diesen Zweck nicht

Eine Aufgabe der Erfindung besteht darin, eine Vorrichtung zum Anschliessen eines Kabels an ein Gehäuse zu zeigen. Eine weitere Aufgabe der Erfindung besteht darin, eine Vorrichtung zum Anschliessen eines mit einem oder mehreren Steckern versehenen Kabels an ein Gehäuse zu zeigen.

Die Aufgabe wird durch die in den unabhängigen Patentansprüchen definierte Kabeleinführung gelöst.

Eine Ausführungsform einer erfindungsgemässen Kabeleinführung weist eine kragarmähnliche Anschlussvorrichtung auf, an der mindestens ein Kabel mittels einem Kabelmantel und einem formschlüssigen Gegenstück befestigt werden kann. Die Anschlussvorrichtung weist eine Basis mit einer Öffnung auf, die zur Aufnahme eines Kabels, respektive eines Kabels mit einem oder mehreren Steckern geeignet ist. Die Basis weist in der Regel Befestigungsmittel auf, z.B. in der Form von Schraubenlöchern, mittels denen die Basis an einem Gehäuse angebracht werden kann. Koaxial oder in einem Winkel, resp. seitlich versetzt zur Öffnung angeordnet, ist eine Haltevorrichtung in einem gewissen Abstand vorgelagert, die zur Aufnahme des Gegenstückes dient.

Die Haltevorrichtung dient zum (formschlüssigen) Anschliessen eines oder mehrerer an einem Kabelmantel angebrachter Gegenstücke. Gute Resultate werden erzielt, indem das Gegenstück einen Hinterschnitt aufweist, der z.B. durch eine Nut gebildet wird, mittels dem das Gegenstück seitlich in eine geschlitzte Endplatte eingeführt werden kann. Durch ein Sicherungselement kann das Gegenstück gegenüber der Endplatte so gesichert werden, dass es nicht heraus fällt

Die Endplatte befindet sich typischerweise am vorderen Ende eines an der Basis vorstehend angebrachten Kragarmes. Der Kragarm ist vorzugsweise skelettiert, respektive so ausgebildet, dass das Kabel ohne grosse Behinderung in die Öffnung eingeführt oder der Stecker mit einem entsprechenden Gegenstück wirkverbunden werden kann. Der Kragarm kann aus einem oder mehreren Stegen bestehen, oder z.B. halbschalenförmig ausgebildet sein. Je nach Anwendungsgebiet besteht die Anschlussvorrichtung aus einem oder mehreren Teilen, die aus Metall oder aus Kunststoff z.B. durch Spritzgiessen hergestellt sind. Bei Bedarf kann der Kragarm auch elastisch deformierbar oder mit einem Gelenk versehen sein, so dass er bei schrägem Zug auf dem Kabel sich entsprechend ausrichtet und als Knickschutz dient. In gewissen Anwendungsgebieten kann das Gelenk auch als Montagehilfe dienen, indem es die Zugänglichkeit zur Öffnung in der Basisplatte verbessert. Bei Bedarf kann das Gelenk teilbar ausgestaltet sein, so dass die Anschlussvorrichtung in zwei Teile zerlegt werden kann, wobei das eine kabelseitig und das andere gehäuseseitig ist. Im Extremfall ist der Kragarm kabelseitig angeordnet und wird bei der Montage an einem entsprechenden Anschlussstück auf der Seite der Basisplatte befestigt

Ein Vorteil der gezeigten Kabeleinführung besteht darin, dass der Anschluss des Kabelmantels (mechanische Zugentlastung) losgelöst vom Wirkverbinden des Kabels, resp. dem Anschluss des Steckers erfolgt

In einer Ausführungsform weist die Kabeleinführung eine Anschlussvorrichtung auf. Die Anschlussvorrichtung hat eine Basisplatte zur Befestigung der Anschlussvorrichtung an einem Gehäuse, eine Öffnung zur Durchführung eines Kabels durch die Basisplatte sowie einen von der Basisplatte vorstehenden Kragarm, an dessen gegenüberliegenden Ende eine Haltevorrichtung angeordnet ist, welche zur Aufnahme eines oder mehrerer an einem oder mehreren Kabeln angebrachten Gegenstücke geeignet ist. Der Kragarm kann skelettiert ausgestaltet sein, derart, dass das Gegenstück mit der Anschlussvorrichtung wirkverbindbar ist, bevor das Kabel angeschlossen wird. Gute Resultate werden erzielt, wenn der Kragarm halbschalenförmig ausgestaltet ist. Der Kragarm kann als (temporäre) Halterung/Montagehilfe für einen Transceiver dienen. Die Haltevorrichtung kann als geschlitzte Endplatte ausgebildet sein. Bei Bedarf kann zwischen dem Gegenstück und der Haltevorrichtung eine Verdrehsicherung ausgebildet sein, die ein ungewohtes Verdrehen des Kabels gegenüber der Anschlussvorrichtung verhindert.

Die erfindungsgemässe Kabeleinführung eignet sich unter anderem für die Verwendung in Mobilfunkanlagen, für so genannte Radio Remote Head (RRH).

Die Erfindung wird anhand der in den nachfolgenden Figuren gezeigten Ausführungsform näher erläutert. Es zeigen:
- Fig. 1: eine Kabeleinführung in montiertem Zustand mit einem Kabel und einem Gehäuse;
- Fig. 2: die Kabeleinführung gemäss figur 1 teilweise geschnitten;
- Fig. 3: die Kabeleinführung gemäss Figur 1 in zerlegtem Zustand;
- Fig. 4: den Montagevorgang eines Kabels an der Kabeleinführung gemäss Figur 1;
- Fig. 5: zeigt eine weitere Ausführungsform einer Kabeleinführung.

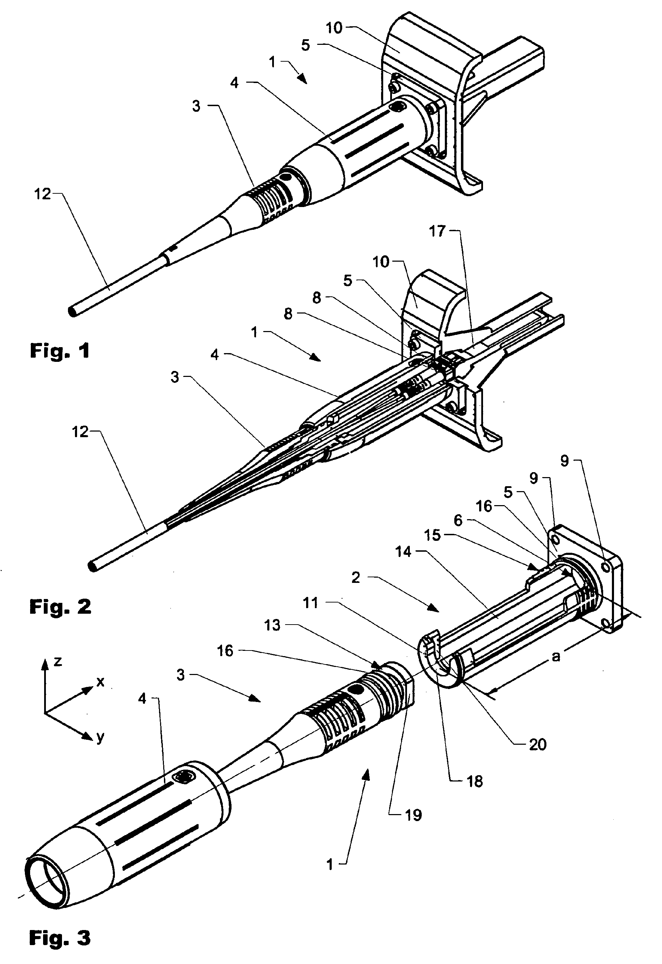

**Figur 1** zeigt in einer perspektivischen Darstellung eine erfindungsgemässe Kabeleinführung 1 von schräg oben in montiertem Zustand. **Figur 2** zeigt die Kabeleinführung 1 gemäss Figur 1 in teilweise geschnittener Darstellung, so dass ein Blick auf das Innenleben möglich ist. Figur 3 zeigt in einer perspektivischen Darstellung von schräg oben die Kabeleinführung 1 in demontiertem Zustand und in Einzelteile zerlegt. Sich entsprechende Teile sind mit gleichen Bezugszeichen versehen.

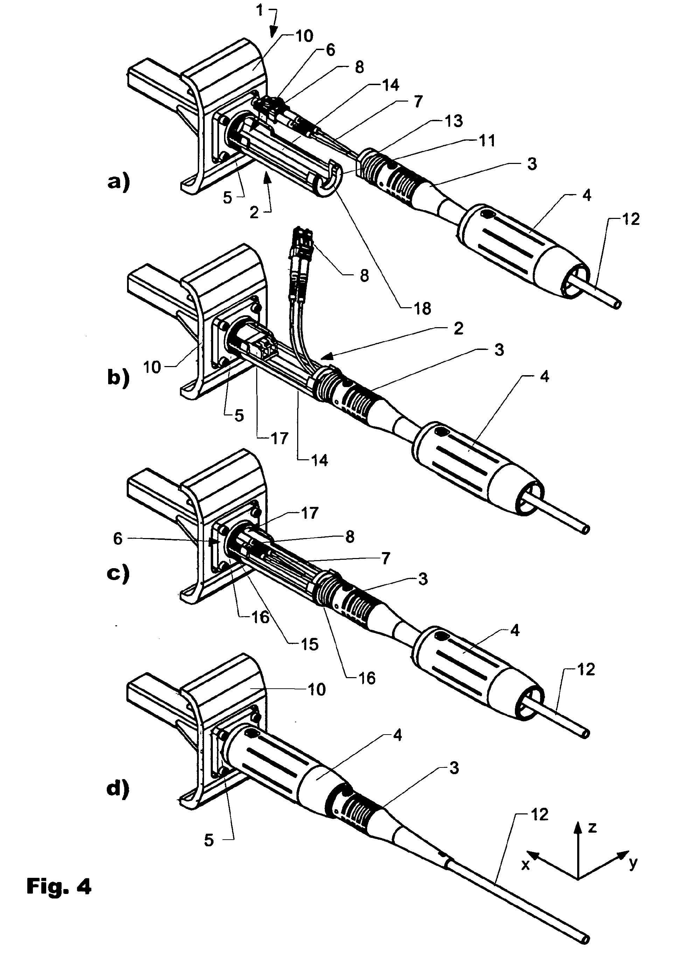

Wie am besten anhand von **Figur 3** zu erkennen ist, besteht eine erfindungsgemässe Kabeleinführung 1 in der Regel aus einer Anschlussvorrichtung 2, einem Gegenstück 3 und einem Sicherungselement 4. Die Anschlussvorrichtung 2 weist eine Basis 5 (Basisplatte) mit einer Öffnung 6 auf, die z.B. zur Aufnahme eines Kabels 7, respektive einem Kabel 7 mit einem oder mehreren Steckern 8 geeignet ist. In der gezeigten Ausführungsform handelt es sich um optische Verbinder (LC-Verbinder), die zum Anschliessen von Glasfasern 7 an einen Transceiver 17 (vgl. Figur 2) dienen. Die Basis 5 weist in der Regel Befestigungsmittel auf, z.B. in der Form von Schraubenlöchern 9, mittels denen die Basis 5 an einem Gehäuse 10 angebracht werden kann. Koaxial oder in einem Winkel, resp. seitlich versetzt zur Öffnung 6 positioniert, ist der Öffnung mindestens eine Haltevorrichtung 11 vorgelagert. In der gezeigten Ausführungsform ist die Haltevorrichtung 11 koaxial zur Öffnung 6 und in einem Abstand a zu dieser an einem hier halbschalenförmigen Kragarm 14 angeordnet. Der Kragarm 14 ist in der gezeigten Ausführungsform so ausgestaltet, dass der Transceiver 17 zum Anschluss der Stecker 8 durch die Öffnung 6 aus dem Gehäuse 10 gezogen werden kann (vgl. **Figur 4b**). Je nach Anwendungsgebiet und -zweck sind andere Ausgestaltungen des Kragarmes 14 möglich, beispielsweise mit nur einem oder mehreren Stegen denkbar. Die gezeigte Ausführungsform bietet den Vorteil, dass die Stecker 8 ungehindert im Bereich der Öffnung 6 angeschlossen werden kann. Bei einem rundum geschlossenen Kragarm wäre dies nicht möglich.

Die Haltevorrichtung 11 dient zum formschlüssigen Anschliessen eines oder mehrerer an einem Kabelmantel 12 angebrachter Gegenstücke 3 (Montagevorgang vgl. **Figur 4**). Gute Resultate werden erzielt, indem das Gegenstück pilzförmig, respektive mit einem Hinterschnitt oder einer Nut 13 ausgebildet ist, derart, dass es in eine entsprechend ausgestaltete Haltevorrichtung 11 eingeklinkt und auf Zug gesichert werden kann. Z.B. kann das Gegenstück 3 zumindest bereichsweise kugelig verdickt ausgestaltet sein, damit es in eine korrespondierend ausgestaltete Gelenkpfanne (Haltevorrichtung) 11 eingeklinkt werden kann, so dass eine gewisse seitliche Beweglichkeit resultiert. Das Gegenstück 3 der gezeigten Ausführungsform ist aus einem vergleichsweise elastischen Kunststoff gefertigt. Das Gegenstück 3 dient einerseits zur Übertragung von Zugkräften vom Kabelmantel 12 auf die Anschlussvorrichtung 2 und andererseits als Knickschutz.

In der gezeigten Ausführungsform ist die Haltevorrichtung 11 als geschlitzte Endplatte 11 mit einer seitlichen Öffnung 18 ausgebildet, in welche das Gegenstück 3 seitlich mit der Nut 13 eingehängt wird. Durch die Ausgestaltung und dem damit resultierenden Formschluss wird ein ungewolltes Verdrehen des Kabels 7 gegenüber der Anschlussvorrichtung 2 verhindert. Zu diesem Zweck weist das Gegenstück 3 am vorderen Ende zwei einander gegenüberliegende parallele Flanken 19 auf (vgl. **Figur 3**), die in montiertem Zustand (vgl. **Figur 4b**) mit entsprechenden Gegenflächen 20 im Bereich des Kragarmes 14 formschlüssig korrespondieren. Andere Möglichkeiten von Verdrehsicherungen sind möglich.

Die Vorrichtung wird gesichert, in dem das hier hülsenförmig ausgebildete Sicherungselement 4 über das Gegenstück 3 und den Kragarm 14 geschoben und mit einem Gewinde 15 im Bereich der Basisplatte verschraubt wird. Andere Sicherungsmittel sind möglich. Dichtungen 16 in Form von O-Ringen schliessen im Bereich des Gewindes 15 und der Endplatte 11 das Innenleben der Kabeleinführung 1 gegenüber äusseren Einflüssen ab.

**Figur 4** zeigt schematisch den Montagevorgang eines mit einem Gegenstück 3 versehenen Kabels 7 an einer Anschlussvorrichtung 2, mittels der Basisplatte 5 am Gehäuse 10 befestigt ist. Der Kragarm 14 steht in etwa senkrecht vom Gehäuse 10 ab.

In **Figur 4a** ist das Kabel 7 mit dem Gegenstück 3 schräg oberhalb des Kragarms 14 mit der Endplatte 11 abgebildet. Das hülsenförmige Sicherungselement 4 ist hinter dem Gegenstück 3 angeordnet. In **Figur 4b** ist das Gegenstück 3 mit der Haltevorrichtung 2 wirkverbunden, indem die Nut 13 in die Öffnung 18 der seitlich geschlitzten Endplatte 11 eingeklinkt ist Die beiden Stecker 8 befinden sich schräg oberhalb, bevor sie mit dem durch die Öffnung 6 aus dem Gehäuse 10 gezogenen Transceiver 17 wirkverbunden werden. Der halbschalenförmige Kragarm 14 dient dabei als Widerlager (Halterung). In **Figur 4c** sind die Stecker 8 mit dem Transceiver 17 wirkverbunden und der Transceiver 17 ist wieder durch die Öffnung 6 ins Gehäuse 10 zurückgeschoben. In **Figur 4d** ist das Sicherungsmittel 4 in x-Richtung über die Anschlussvorrichtung 2 geschoben und mit dem Gewinde 15 im Bereich der Öffnung 6 verschraubt. Dichtungen 16 dichten die Vorrichtung gegen äussere Einflüsse ab.

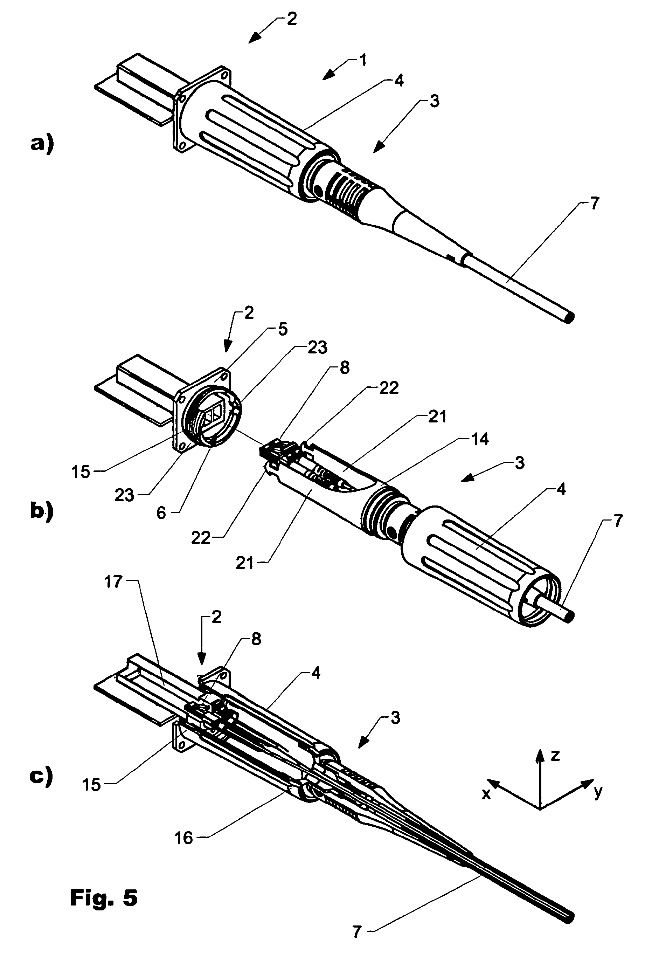

**Figur 5** zeigt eine weitere Ausführungsform einer Kabeleinführung 1, bei welcher der Kragarm kabelseitig ist und bei der Montage mit einem entsprechenden Anschlussstück auf der Seite der Basisplatte wirkverbunden wird. In **Figur 5a** zeigt die Kabeleinführung 1 in montiertem Zustand von schräg oben. **Figur 5b** zeigt die Kabeleinführung im demontierten Zustand und **Figur 5c** zeigt eine Schnittdarstellung durch die montierte Kabeleinführung 1 gemäss Figur 5a so, dass das Innenleben besser sichtbar ist

Die Kabeleinführung 1 besteht aus einer Anschlussvorrichtung 2, einem Gegenstück 3 und einem Sicherungselement 4. Die Anschlussvorrichtung 2 weist eine Basis 5 (Basisplatte) mit einer Öffnung 6 auf, die zur Aufnahme eines Kabels 7 mit einem oder mehreren Steckern 8 geeignet ist. Ein Kragarm 14 ist in der gezeigten Ausführungsform teilbar ausgestaltet, wobei der längere Teil hier kabelseitig angeordnet ist. Der Kragarm 14 weist in der gezeigten Ausführungsform zwei Stege 21 auf, die am vorderen Ende je ein hier hammerförmiges Befestigungselement 22 aufweisen. Die Anschlussvorrichtung 2 weist zwei Vertiefungen 23 auf, die in montiertem Zustand (vgl. **Figur 5c**) mit den hammerförmigen Befestigungselementen 22 korrespondieren. Die Stege 21 sind federnd ausgestaltet, so dass die hammerförmigen Elemente 22 in die gegenüberliegenden Vertiefungen 23 eingeschnappt werden können. Die gezeigte Ausführungsform zeichnet sich durch einen schlanken, einfach herzustellenden Aufbau aus. Andere Ausführungsformen der Befestigungselemente sind möglich. Z.B. können diese als korrespondierende Hacken ausgestaltet sein, welche von oben oder unten in Querrichtung wirkverbindbar sind. Eine weitere Möglichkeit besteht darin, die 8efestigungselemente als BajonettVerschluss oder Gewinde auszubilden. Je nach Anwendungsgebiet ist der Kragarm 14 fest oder teilbar mit dem Kabel 7, respektive dem Gegenstück 3 verbunden. Nachdem die hammerförmigen Befestigungselemente 22 in die Vertiefungen 23 eingeschnappt und die Stecker 8 angeschlossen sind, wird das hülsenförmige Sicherungselement 4 über den Kragarm 14 geschoben und mit einem Gewinde 15 der Anschlussvorrichtung 2 verschraubt (vgl. Figuren 5a und 5c). Das hülsenförmige Sicherungselement 4 kann so ausgestaltet sein, dass es zumindest in gewissen Raumrichtungen einen grossen Teil der auftretenden Kräfte übernimmt und zur Stabilisierung der Kabeleinführung z.B. bei Kräften in Querrichtung (Querzug) beiträgt.

Die Vertiefungen 23 können innen oder aussen liegend angeordnet sein. Die Stege 21 und das Sicherungselement 4 verhindern im montierten Zustand ein ungewolltes Verdrehen des Kabels und entlasten das Kabel gegen Biegemomente und auf Zug. Zwischen dem Gegenstück 3 und dem Sicherungselement 4 und dem Sicherungselement 4 und der Anschlussvorrichtung 2 können Dichtungen 16 vorgesehen werden, welche die Kabeleinführung 1 gegen Umwelteinflüsse abdichtet. Bei Bedarf kann der Kragarm 14 elastisch oder in einem definierten Mass beweglich ausgestaltet sein. Je nach Anwendungsgebiet kann der Kragarm 14 oder das Sicherungselement 4 auf andere Art und Weise an der Anschlussvorrichtung 2 befestigt werden. Z.B. besteht die Möglichkeit, den Kragarm 14 über ein Schraubgewinde mit der Anschlussvorrichtung 2 zu verbinden. Das Sicherungselement 4 kann z.B. über eine Schnappverbindung mit der Anschlussvorrichtung 2 wirkverbunden werden.

### BEZUGSZEICHEN

- 1: Kabeleinführung
- 2: Anschlussvorrichtung
- 3: Gegenstück
- 4: Sicherungselement
- 5: Basis (Basisplatte)
- 6: Öffnung
- 7: Kabel
- 8: Stecker
- 9: Schraubenlöcher
- 10: Gehäuse
- 11: Haltevorrichtung (geschlitzte Endplatte)
- 12: Mantel
- 13: Nut
- 14: Kragarm
- 15: Gewinde
- 16: Dichtung
- 17: Optisches Gegenstück (Transceiver)
- 18: Öffnung in Endplatte
- 19: Flanken (Gegenstück 3)
- 20: Gegenfläche
- 21: Steg (Kragarm)
- 22: Hammerförmiges Befestigungselement
- 23: Vertiefung zur Aufnahme eines hammerförmigen Befestigungselementes

## Patentansprüche

1. Kabeleinführung (1) zum Anschliessen eines Kabels (7) an ein Gehäuse (10),
wobei die Kabeleinführung (1) eine Anschlussvorrichtung (2) mit einer Basisplatte (5) zur Befestigung der Anschlussvorrichtung (2) am Gehäuse (10) aufweist und wobei die Basisplatte (5) eine Öffnung (6) zur Durchführung des Kabels (7) durch die Basisplatte (5) umfasst,
sowie einen von der Basisplatte (5) vorstehenden Kragarm (14), an dessen von der Basisplatte abgewandten Ende eine Haltevorrichtung (11) zur Befestigung eines am Kabel (7) angeordneten Gegenstücks (3) dient,
**dadurch gekennzeichnet, dass**
ein Sicherungselement (4) hülsenförmig ausgestaltet ist, derart, dass es bei wirkverbundenem Gegenstück (3) über die Anschlussvorrichtung (2) geschoben werden kann und
die Anschlussvorrichtung (2) im Bereich der Basisplatte (5) ein Sicherungsmittel (15) aufweist, mit dem das Sicherungselement (4) im Bereich der Basisplatte (5) mit der Anschlussvorrichtung (2) wirkverbindbar ist.

2. Kabeleinführung (1) gemäss Patentanspruch 1, **dadurch gekennzeichnet, dass** das Sicherungsmittel (15) ein Schraubgewinde (15) oder eine Schnappverbindung ist.

3. Kabeleinführung (1) gemäss Patentanspruch 1 oder 2, **dadurch gekennzeichnet, dass** der Kragarm (14) als separates Teil ausgebildet und über formschlüssige Wirkverbindungsmittel (22, 23) mit der Anschlussvorrichtung (2) wirkverbindbar ist

4. Kabeleinführung (1) gemäss Patentanspruch 3, **dadurch gekennzeichnet, dass** die Wirkverbindungsmittel (22, 23) aus einem hammerförmigen Befestigungselement (22) und einer korrespondierenden Vertiefung (23) bestehen, in welche das Befestigungselement (22) eingehängt werden kann.

5. Kabeleinführung (1) gemäss Patentanspruch 3, **dadurch gekennzeichnet, dass** die Wirkverbindungsmittel (22, 23) als Gewinde ausgebildet sind.

6. Kabeleinführung (1) gemäss Patentanspruch 3, **dadurch gekennzeichnet, dass** die Wirkverbindungsmittel (22, 23) als Bajonettverschluss ausgebildet sind.

7. Kabeleinführung (1) gemäss einem der vorangehenden Patentansprüche, **dadurch gekennzeichnet, dass** der Kragarm (14) skelettiert ausgestaltet ist, derart, dass das Gegenstück (3) mit der Anschlussvorrichtung (2) wirkverbindbar ist, bevor das Kabel (7) angeschlossen wird.

8. Kabeleinführung (1) gemäss einem der vorangehenden Patentansprüche, **dadurch gekennzeichnet, dass** der Kragarm (14) halbschalenförmig ausgestaltet ist oder zwei Stege (21) aufweist

9. Kabeleinführung (1) gemäss einem der vorangehenden Patentansprüche, **dadurch gekennzeichnet, dass** der Kragarm (14) als Halterung für einen Transceiver (17) dient.

10. Kabeleinführung (1) gemäss einem der vorangehenden Patentansprüche, **dadurch gekennzeichnet, dass** die Haltevorrichtung (11) eine seitlich geschlitzte Endplatte (11) ist.

11. Kabeleinführung (1) gemäss einem der vorangehenden Patentansprüche, **dadurch gekennzeichnet, dass** das Gegenstück (3) elastisch ausgebildet ist und als Knickschutz dient.

12. Kabeleinführung (1) gemäss einem der vorangehenden Patentansprüche, **dadurch gekennzeichnet, dass** zwischen dem Gegenstück (3) und der Haltevorrichtung (11) eine Verdrehsicherung angeordnet ist, die ein ungewolltes Verdrehen des Kabels (7) gegenüber der Anschlussvorrichtung (2) verhindert.

13. Kabeleinführung (1) gemäss einem der vorangehenden Patentansprüche, **dadurch gekennzeichnet, dass** im Bereich der Basisplatte (5) und dem Gegenstück (3) Dichtungen (16) angeordnet sind.

## Claims

1. Cable entry (1) for connecting a cable (7) to a housing (10), the cable entry (1) having a connecting apparatus (2) which has a base plate (5) for attaching the connecting apparatus (2) to the housing (10), and the base plate (5) comprising an opening (6) for passing the cable (7) through the base plate (5), and a cantilever arm (14) which projects from the base plate (5) and at whose end facing away from the base plate a holding apparatus (11) serves for attaching a mating piece (3) which is arranged on the cable (7), **characterized in that** a securing element (4) is in the form of a sleeve, such that it can be pushed over the connecting apparatus when the mating piece (3) is operatively connected, and the connecting apparatus (2) has a securing means (15) in the area of the base plate (5), by which securing means (15) the securing element (4) can be operatively connected to the connecting apparatus (2) in the area of the base plate (5).

2. Cable entry (1) according to Patent Claim 1, **characterized in that** the securing means (15) is a screw thread (15) or a snap-action connection.

3. Cable entry (1) according to Patent Claim 1 or 2, **characterized in that** the cantilever arm (14) is in the form of a separate part and can be operatively connected to the connecting apparatus (2) via interlocking operative connecting means (22, 23).

4. Cable entry (1) according to Patent Claim 3, **characterized in that** the operative connecting means (22, 23) consist of an attachment element (22) which is in the form of a hammer, and a corresponding depression (23) into which the attachment element (22) can be hooked.

5. Cable entry (1) according to Patent Claim 3, **characterized in that** the operative connecting means (22, 23) are formed as a thread.

6. Cable entry (1) according to Patent Claim 3, **characterized in that** the operative connecting means (22, 23) are formed as a bayonet fitting.

7. Cable entry (1) according to one of the preceding patent claims, **characterized in that** the cantilever arm (14) is designed to be skeletal, such that the mating piece (3) can be operatively connected to the connecting apparatus (2) before the cable (7) is connected.

8. Cable entry (1) according to one of the preceding patent claims, **characterized in that** the cantilever arm (14) is in the form of a half shell or has two webs (21).

9. Cable entry (1) according to one of the preceding patent claims, **characterized in that** the cantilever arm (14) is used as a holder for a transceiver (17).

10. Cable entry (1) according to one of the preceding patent claims, **characterized in that** the holding apparatus (11) is an end plate (11) which is slotted at the side.

11. Cable entry (1) according to one of the preceding patent claims, **characterized in that** the mating piece (3) is elastic and is used for kink protection.

12. The cable entry (1) according to one of the preceding patent claims, **characterized in that** a twisting protection means is arranged between the mating piece (3) and the holding apparatus (11) and prevents inadvertent twisting of the cable (7) with respect to the connecting apparatus (2).

13. The cable entry (1) according to one of the preceding patent claims, **characterized in that** seals (16) are arranged in the area of the base plate (5) and the mating piece (3).

## Revendications

1. Entrée de câble (1) destinée à raccorder un câble (7) à un boîtier (10),
l'entrée de câble (1) présentant un dispositif de raccordement (2) doté d'une plaque de base (5) destinée à fixer le dispositif de raccordement (2) sur le boîtier (10),
la plaque de base (5) comportant
une ouverture (6) permettant au câble (7) de traverser la plaque de base (5) et
un bras (14) débordant en porte-à-faux de la plaque de base (5),
un dispositif de maintien (11) destiné à fixer une pièce complémentaire (3) disposée sur le câble (7) étant prévu à l'extrémité du bras en porte-à-faux non tournée vers la plaque de base,
**caractérisée en ce que**
un élément de blocage (14) est configuré en forme de douille de telle sorte qu'il puisse être passé au-dessus du dispositif de raccordement (2) lorsque la pièce complémentaire (3) coopère avec lui et
**en ce que** le dispositif de raccordement (2) présente au niveau de la plaque de base (5) un moyen de blocage (15) avec lequel l'élément de blocage (4) peut coopérer avec le dispositif de raccordement (2) au niveau de la plaque de base (5).

2. Entrée de câble (1) selon la revendication 1, **caractérisée en ce que** le moyen de blocage (15) est un filet de vissage (15) ou une liaison élastique.

3. Entrée de câble (1) selon les revendications 1 ou 2, **caractérisée en ce que** le bras (14) en porte-à-faux est configuré comme pièce séparée et peut coopérer avec le dispositif de raccordement (2) par l'intermédiaire de moyens (22, 23) de coopération en correspondance géométrique.

4. Entrée de câble (1) selon la revendication 3, **caractérisée en ce que** les moyens de coopération (22, 23) sont constitués d'un élément de fixation (22) en forme de marteau et d'un creux correspondant (23) dans lequel l'élément de fixation (22) peut être suspendu.

5. Entrée de câble (1) selon la revendication 3, **caractérisée en ce que** les moyens de coopération (22, 23) sont configurés sous la forme de filets.

6. Entrée de câble (1) selon la revendication 3, **caractérisée en ce que** les moyens de coopération (22, 23) sont configurés comme fermetures à baïonnette.

7. Entrée de câble (1) selon l'une des revendications précédentes, **caractérisée en ce que** le bras (14) en porte-à-faux est configuré en squelette de telle sorte que la pièce complémentaire (3) puisse coopérer avec le dispositif de raccordement (2) avant que le câble (7) soit raccordé.

8. Entrée de câble (1) selon l'une des revendications précédentes, **caractérisée en ce que** le bras (14) en porte-à-faux est configuré en forme de demi-coquille ou présente deux nervures (21).

9. Entrée de câble (1) selon l'une des revendications précédentes, **caractérisée en ce que** le bras (14) en porte-à-faux sert de support pour un émetteur-récepteur (17).

10. Entrée de câble (1) selon l'une des revendications précédentes, **caractérisée en ce que** le dispositif de maintien (11) est une plaque d'extrémité (11) fendue latéralement.

11. Entrée de câble (1) selon l'une des revendications précédentes, **caractérisée en ce que** la pièce complémentaire (3) est élastique et sert de protection contre le coudage.

12. Entrée de câble (1) selon l'une des revendications précédentes, **caractérisée en ce qu'**un blocage anti-rotation qui empêche une rotation intempestive du câble (7) par rapport au dispositif de raccordement (2) est disposé entre la pièce complémentaire (3) et le dispositif de maintien (11).

13. Entrée de câble (1) selon l'une des revendications précédentes, **caractérisée en ce que** des joints d'étanchéité (16) sont disposés au niveau de la plaque de base (5) et de la pièce complémentaire (3).
